(19) Europäisches Patentamt
European Patent Office
Office européen des brevets

(11) **EP 2 305 368 A1**

(12) **EUROPEAN PATENT APPLICATION**

(43) Date of publication:
**06.04.2011 Bulletin 2011/14**

(51) Int Cl.:
**B01D 61/00** (2006.01) **B01D 71/02** (2006.01)
**C01B 31/02** (2006.01) **F03G 7/00** (2006.01)

(21) Application number: **09394028.6**

(22) Date of filing: **05.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **The Provost, Fellows and Scholars of the College**
**of the Holy and Undivided Trinity of Queen Elizabeth near Dublin**
**Dublin 2 (IE)**

(72) Inventors:
• **Blau, Werner**
**Dalkey, County Dublin (IE)**

• **Padamati, Ramesh**
**Custom House Square**
**Dublin 1 (IE)**
• **Drury, Anna**
**Monkstown**
**County Dublin (IE)**

(74) Representative: **O'Brien, John Augustine et al**
**John A. O'Brien & Associates**
**Third Floor,**
**Duncairn House,**
**14 Carysfort Avenue**
**Blackrock, Co Dublin (IE)**

(54) **A membrane and use thereof**

(57) The invention provides the use of a membrane comprising a support layer and an electrically conductive porous nanotube layer for generating power from water by pressure retarded osmosis. The electrically conductive nanotubes may be arranged in a mat, alternatively the electrically conductive nanotubes may be orientated with respect to the support layer. The electrically conductive nanotubes may be carbon nanotubes. The electrically conductive nanotubes may be single walled nanotubes and/or double walled nanotubes and/or multiwalled nanotubes. The electrically conductive nanotubes may be functionalised.

Fig. 3

**EP 2 305 368 A1**

**Description**

Introduction

The invention relates to a method for generating power. In particular, the invention relates to a method for generating power using pressure retarded osmosis.

Statements of Invention

According to the invention there is provided the use of a membrane comprising a support layer and an electrically conductive porous nanotube layer for generating power from water by pressure retarded osmosis.
The support layer may comprise a Bucky paper.
The membrane may comprise a strengthening layer. The strengthening layer may comprise cellulose acetate.
The electrically conductive nanotubes may be arranged in a mat. Alternatively, the electrically conductive nanotubes may be orientated with respect to the support layer.
The electrically conductive nanotubes may be carbon nanotubes.
The electrically conductive nanotubes may be single walled nanotubes and/or double walled nanotubes and/or multiwalled nanotubes.
The electrically conductive nanotubes may be functionalised. The nanotubes may be functionalised with COOH and/or silver.
The support layer may comprise a filter membrane. The filter membrane may comprise pores with an average size of about $0.2\mu m$. The filter membrane may comprise mixed cellulose esters and/or nylon 66 and/or fluoropore.
The nanotube layer may have a porosity of between about 10% and about 20%.
The strengthening layer may have a porosity of between about 85% to about 95%.
The nanotube layer may have an average pore size of between about $0.04\mu m$ and about $0.16\mu m$.
The strengthening layer may have an average pore size of between about $0\mu m$ to about $1\mu m$.
The water may be salt water, such as sea water. A salinity gradient concentration may be generated across the membrane.
The invention further provides a method for generating power from an osmotic pressure gradient generated across a membrane comprising a support layer and an electrically conductive porous nanotube layer comprising the steps of:

- providing a membrane as described herein;
- pumping salt water and fresh water across the membrane to create an osmotic difference across the membrane;
- applying an alternating electric current to the electrically conductive porous nanotube layer; and
- harnessing the power generated from the osmotic pressure gradient.

The alternating electric current may be applied in the range of between about 20 to about 150V.
The alternating electric current may be applied in the range of between about 20 to about 10,000 Hz.

Brief Description of the Drawings

The invention will be more clearly understood from the following description of an embodiment thereof, given by way of example only, with reference to the accompanying drawings, in which:

Fig. 1 is a scanning electron microscope image of a carbon nanotube layer ( Bucky paper membrane) made with n-methyl-1-pyrrolidone (NMP) on top of a Millipore nylon filter membrane of pore size 0.45 $\mu$m;

Fig. 2 is a scanning electron microscope image of a carbon nanotube layer (Bucky paper membrane) made with sodium dodecyl sulphate (SDS) on top of a cellulose acetate filter of pore size 0.30 $\mu$m;

Figs. 3A to D are scanning electron microscope images of a cellulose acetate/bucky paper composite. (A) is an image of the cellulose acetate layer, (B) is an enlarged image of the cellulose acetate layer, (C) is an image of the carbon nanotube layer, and (D) is an enlarged image of the carbon nanotube layer;

Fig. 4 is a schematic of a set up in which osmosis can be used to generate energy; and

Fig 5 is a schematic of a test rig used to measure the hydrostatic pressure created by osmosis when fresh water flows from one chamber of the test rig to a chamber which contains higher salinity water.

Detailed Description

The invention relates to a method to generate power from a salinity concentration gradient between fresh water and sea water using membranes based on carbon nanotubes which have the potential to achieve faster flows and thus create more energy than previous osmotic membranes.

The membranes described herein may be used in salinity power generation. Energy created by osmosis has very little impact on the environment and is renewable. Furthermore, there are no $CO_2$, emissions or toxic effluents, salts are not consumed in the process and there are no fuel costs. In addition, salinity power plants are flexible as regards, size and design. Salinity power plants can be built almost anywhere where there is good supply of fresh water and sea water and may be adapted to the local building environment, or combined with existing power stations, thus saving costs.

The pressure retarded osmosis membranes described herein may also be used to generate fresh water from salt water using reverse osmosis.

We describe the preparation of carbon nanotube (CNT) sheets and carbon nanotube / cellulose acetate composite membranes which can be used as pressure retarded osmosis membranes for the generation of power from salt water. The CNT sheets were prepared by dispersion of commercial multiwall (MW), doublewall (DW), and singlewall (SW) carbon nanotubes using surfactants or solvents, followed by vacuum filtration onto filter membranes such as cellulose acetate, nylon and PVDF. The composite membranes of CNT and cellulose acetate are prepared by a phase inversion method by casting a cellulose acetate layer on top of bucky paper. Depending on the type of membrane used the osmotic pressure generated was in the range of 30-400 Pa tested using a laboratory scale osmosis test rig.

The energy generated using a pressure-retarded osmosis process has little impact on the environment. The pressure retarded osmosis process described herein provides a cheap and renewable energy source. The osmotic pressure generated depends on the concentration gradient formed between both sides of the membrane; the concentration gradient is influenced by the membrane material. Thus the performance of the membrane is crucial for the success of pressure retarded osmosis as a cheap and renewable energy source and currently presents the major bottleneck for large-scale commercial feasibility. Many commercial membranes allow for very high water permeability, but also possess high salt permeability. In order to generate a high head of pressure build-up, membranes having only high water permeability are required. The currently available cellulose acetate membranes tend to clog very easily due to a build of salt on the membrane surface. The salt also interacts with polymer materials in the membrane itself resulting in further clogging of the membranes [S.S. Madaeri, 1999]

We describe the fabrication of semi-permeable membranes which can be used as pressure-retarded osmosis membranes in salinity power generation. Two types of membrane were fabricated:

1) Carbon nanotube sheets
2) Carbon nanotube / cellulose acetate composite membranes

Molecular simulations have indicated that carbon nanotube membranes are about 10,000 times more efficient than the commercially available synthetic membranes for pressure retarded osmosis [Hummer 2001]. In addition, carbon nanotube membranes are chemically inert and have high thermal stability compared to polymer based membranes [H.Dai, 2002 and A. Srivasta et al., 2004]. The water flow through a CNT has been measured by Holt et al from the Lawrence Livermore National Laboratory under the auspices of the US Department of Energy and is comparable to flow rates extrapolated from molecular dynamic simulations [Hummer 2001, Murata 2000, Majumder 2005, Tess 1996, Berezhkovskii 2002].

The invention will be more clearly understood from the following examples thereof.

**Example 1- Carbon nanotube sheets**

Carbon nanotube "Bucky" papers on top of commercial nylon filters of 0.45μm pore size were prepared.
MWCNTs, DWCNTs, SWCNTs and functionalised CNTs were dispersed in N-methyl-1-pyrrolidone (NMP) as follows:

*Table 1: Details of amount and type CNTs used with amounts of dispersant (NMP)*

| Membrane No | CNT type | Manufacturer | Amount used (mg) | Amount NMP (mL) |
|---|---|---|---|---|
| 1 | **Nanocyl 3100** Thin MWCNTs, produced via CCVD process purified to greater than 95% carbon, then functionalized with COOH. | Nanocyl | 20 | 400 |
| 2 | | | 60 | 1200 |
| 3 | | | 60 | 1200 |
| 4 | **Nanocyl 1100** SWCNTs produced via ccvd, then purified to greater than 70% carbon and functionalized with COOH. | Nanocyl | 40 | 800 |
| 5 | **Nanocyl SA** DWCNTs | Nanocyl | 10 | 200 |
| 6 | **SWCNTs** NRJ21 | NRJ | 40 | 800 |

Nanocyl 3100 was purified in house by refluxing with 18% HCl for 12 h at 100 °C, followed by filtration, washing with $H_2O$ and drying in a CVD furnace at 400 °C.

The dispersion was carried out as follows: Ten 20 mL vials each containing 2 mg CNTs and 20 mL NMP were sonicated using a sonic tip for 5 min at 38% amplitude to disperse the CNTs in the solvent and break up nanotube aggregates. The contents were then added to a 500 mL round bottomed flask and diluted 100% by adding 200 mL NMP. This was sonicated in a sonic bath for 3-4 hrs to ensure the nanotubes were fully dispersed in the solvent. The suspension was then centrifuged to remove impurities and large carbon aggregates and finally filtered onto a nylon membrane in a Buckner flask to leave a uniform layer or mesh of CNTs on the surface of the membrane. The filtrand (residue) was washed with deionised water (1L) and then (together with the membrane) removed and dried overnight in a vacuum oven at 40°C to ensure complete removal of the solvent.

### Example 2 - Carbon nanotube sheets

Carbon nanotube "Bucky" papers on top of mixed cellulose ester filters of 0.30 $\mu$m pore size were prepared.

*Table 2: Details of amount and type CNTs used with amounts of dispersant (SDS or AQ)*

| Membrane No | CNT type | Manufacturer | Amount used (mg) | Amount SDS or AQ (mg) |
|---|---|---|---|---|
| 1 | **Nanocyl 3100** Thin MWCNTs, produced via CCVD process purified to greater than 95% carbon, then functionalized with COOH. Purified in house. | Nanocyl | 12 | 600 (SDS) |
| 2 | | | 24 | 600 (SDS) |
| 3 | | | 90 | 400 (SDS) |
| 4 | | | 90 | 400 (SDS) |
| 5 | **Nanocyl 3100** MWCNTs | Nanocyl | 20 | 40 (AQ) |
| 6 | | | | 60 (AQ) |
| 7 | **Nanocyl SA** DWCNTs | Nanocyl | 40 | 80 (AQ) |
| 8 | **AgMWCNTs** Functionalised in house | Nanocyl | 20 | 40 (AQ) |

MWCNTs, DWCNTs, SWCNTs and functionalised CNTs were dispersed in Sodium dodecyl sulphate (SDS) -an ionic surfactant and Nanodisperse AQ - a non-ionic surfactant as shown in Table 2.: Nanocyl 3100 was purified in house by refluxing with 18% HCl for 12 h at 100 °C, followed by filtration, washing with $H_2O$ and drying in a CVD furnace at 400 °C.

The silver particles were incorporate onto MWCNTs as follows:

MWCNT (Nanocyl 3100) were first dispersed in a non-ionic surfactant (Nanodisperse AQ in water) and sonicated for 10 minutes. A solution of silver nitrate (Aldrich 209139) in water was added to this and stirred continuously for 4 hours. The dispersion was then transferred into an open tray and placed in a fume cupboard to allow the water to evaporate. The resulting silver nitrate-MWCNT composite was heated to 400°C (at a rate of 30°C/min) and held at that temperature for 3 hours so that the silver nitrate was reduced to silver. The modified tubes were then washed with deionised water in a sonic bath and dried at room temperature. TGA and EDAX analysis indicated that between 20-40 % Ag was present

Bucky papers were prepared with the dispersant SDS (Membranes 1-4) as follows:

A 1% solution of SDS in deionised water was prepared and left stirring overnight to ensure complete dispersion of the SDS. 4.5mg of CNTs and 20ml of this SDS solution were added to 20 vials each of 20 mL capacity. The vials were sonicated using a sonic tip for 5 min at 38% amplitude, then combined into a 500 mL round bottomed flask and sonicated in a sonic bath for 4 hours. The dispersion was then slowly filtered through a cellulose ester filter on a Buchner funnel and washed with copious amounts of deionised water until the surfactant was completely removed (no more bubbles appeared in the filtrate). The membrane was then removed and dried overnight in a vacuum oven at 40°C to ensure complete removal of the solvent.

Bucky papers were prepared with the dispersant Nanodisperse AQ (membranes 5-8) as follows: 0.01g CNT were placed in a 20mL vial and 10mL of deionised water added. This was agitated using an ultrasonic probe (2min) and 0.02g Nanodisperse AQ then added to the vial. This was again agitated using an ultrasonic tip (2min) and 180mL of deionised water added.

### Example 3 - Carbon nanotube / cellulose acetate composite membranes

Carbon nanotube / cellulose acetate composite membranes are prepared by making a freestanding Bucky paper and casting a cellulose acetate membrane on top of it.

MWCNT from Nanocyl (Nanocyl 3100) were purified as described in Example 2. The cellulose acetate was purchased from Sigma Aldrich and used without further purification.

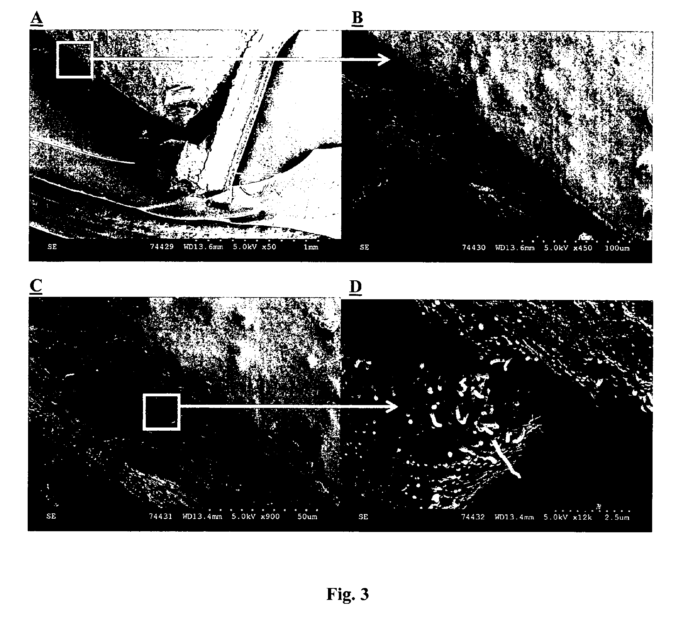

The Bucky paper was prepared with SDS as described in Example 2 above but using an alumina membrane instead of mixed cellulose esters in the Buchner funnel. When dry the Bucky paper peeled off the alumina membrane and was found to be between 70 - 140 $\mu$m thick and weighed 0.5 mg. The Bucky paper was then adhered to a glass slide and a cellulose acetate layer cast on top of it by the phase inversion method. The cellulose acetate layer was made by dissolving 8.45g cellulose acetate in 27.62g dioxane, 10.57 g acetone, 5.07g acetic acid and finally 8.45g methanol, stirring at room temperature until the cellulose acetate was completely dissolved (usually one day) and using a clean glass rod, pulling the solution over the glass plate. It was and left to evaporate in air for about 15 seconds, then placed in an ice bath for about 2 hours and 15 minutes at a temperature between about 0 to about 4°C followed by annealing for about 15 minutes at a temperature between about 80 to 85°C. Referring to Fig. 3, SEM analysis showed that this composite membrane consists of 3 distinct layers, a smooth dense top layer of cellulose acetate (Fig. 3A and B) a porous composite layer of cellulose acetate with embedded nanotubes (Fig. 3C and D) and a bucky paper layer composed of pure CNTs at the bottom.

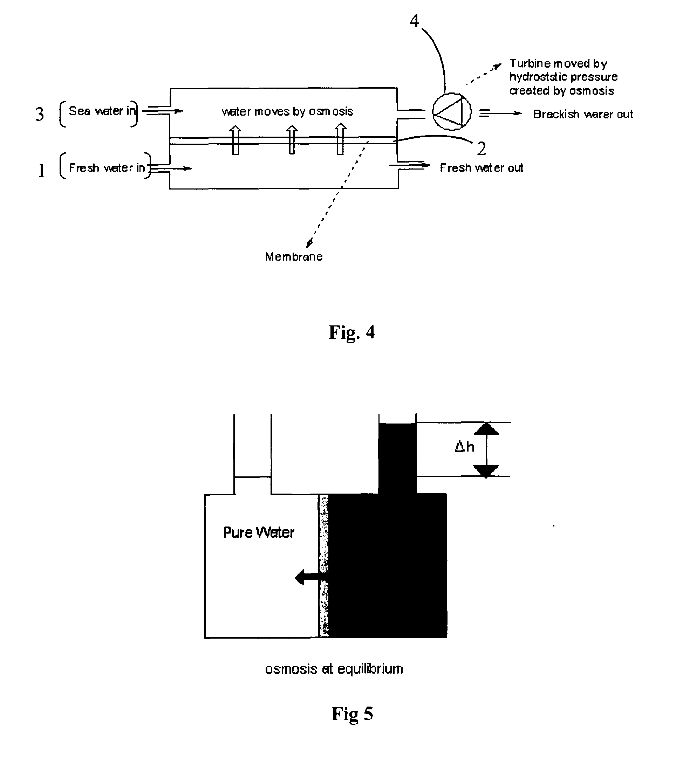

The membrane was tested in the osmosis rig (shown in Fig 5). After 24h in the rig the hydrostatic pressure head $\Delta h$ was measured as 2 cm and the hydrostatic pressure calculated from equation 2

$$\Delta P = \rho.g.\Delta h \qquad\qquad \text{(Equation 1)}$$

Where $\rho$ = density of the solution, g= acceleration due to gravity and $\Delta h$ is the height difference or relative height of the fluid column (in meters).

At equilibrium the osmotic pressure $\Delta\Pi$ is equal to the hyrdostatic pressure $\Delta P$ and can be calculated from equation 1. In this case an osmotic pressure of 219.20 Pa was achieved.

The efficiency of the membrane was calculated from equation 2

$$\boxed{\Delta \pi = i.\eta.R.T.\Delta C}$$ (Equation 2)

Where $\Delta \pi$ : Pressure (Pa)

$\Delta C$ : Difference in concentration on the salt water side (mol/L)

$\eta$ : Efficiency of the membrane

R: the universal gas constant

T: the temperature (K)

and i= numer of ions per molecule (in this case 2 for salt).

An efficiency of 8.6% was obtained in this case.

**Example 4 - Characterisation of carbon nanotube sheets**

The porosity of the Bucky papers prepared with various types of nanotubes was measured by Archimedes principal (Equation 3) and found to be between 10-20%

$$Porosity = \frac{m_{wet} - m_{dry}}{V_{total}}$$ (Equation 3)

Wherein: $m_{wet}$ = mass of membrane which had been soaked in water for 24 h, then mopped with blotting paper; $m_{dry}$ = mass of soaked membrane after it had been dried in a vacuum oven at 40 °C overnight; and $V_{total}$ = volume of the membrane calculated by using the formula for the volume of a disc $\Pi r^2 h$, where r = radius of the membrane and h=thickness

*Carbon nanotube Bucky papers on top of commercial nylon*

The thickness of the Bucky paper was measured with a digital micrometer and found to be 0.01 mm $\pm$ 0.005 mm.

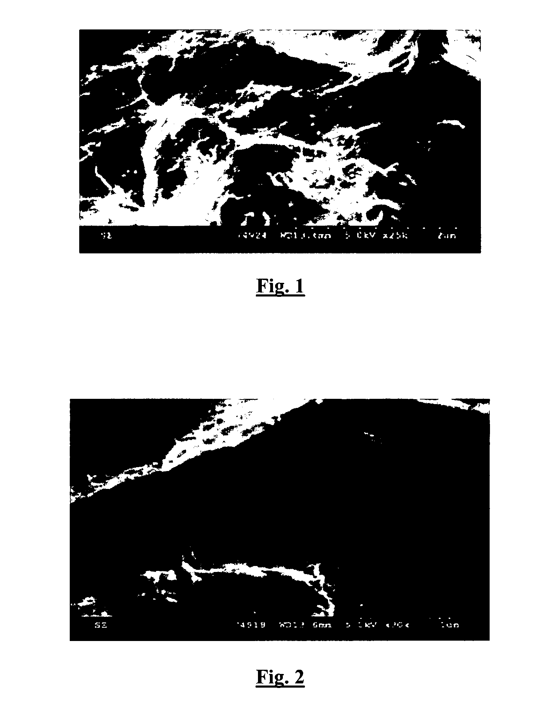

The pore sizes were measured from the Scanning Electron Microscope (SEM) image of Fig. 1 using an image tool software and were found to be between about 0.04 - 0.09 $\mu$m $\pm$ 0.01 1 $\mu$m

The Bucky paper with the best results in the osmotic pressure test rig experiments was made using the commercially available Nanocyl 3100 carbon nanotubes (purchased from Nanocyl) that were purified in house. This Bucky paper was found to have an osmotic pressure of 431.64 Pa and an efficiency of 17.68% when compared to the value achieved by a commercial semi-permeable membrane in the test rig.

*Carbon nanotube Bucky papers on top of mixed cellulose ester filters*

The best Bucky paper made with the SDS (purified Nanocyl 3100) was found to be 0.10 mm thick and have a porosity of 17%. The pore sizes were measured from the scanning electron microscope image of Fig. 2 using an image tool software SEM and were found to be between 0.04 and 0.16 $\mu$m $\pm$ 0.01$\mu$m.

The Bucky paper was found to have an osmotic pressure of 29.43 Pa and an efficiency of 1.20% when compared to the value achieved by a commercial semi-permeable membrane in the test rig.

Table 3 below lists the percentage porosity for the various Bucky membranes tested.

*Table 3: Porosity Data of various bucky paper membranes*

**Nanotube type and dispersant porosity**

Ag MWCNT+water+nanosperce AQ 19%

DWCNT purified+water+nanosperce AQ 18%

DWCNT purified+NMP 18%

nanocyl 3100 purified + water+a little AQ 15%
nanocyl 3100 purified + water+a lot of AQ 15%
nanocyl 3100 purified +SDS (12mg) 15%
nanocyl 3100 purified +SDS (24mg) 15%
nanocyl 3100 purified +SDS (90mg) 17%
nanocyl 3100 purified + NMP (20mg) 10%
nanocyl 3100 purified + NMP (60mg) 11 %

Unlike the commercially available membranes, the membranes described herein have the advantage of hydrophobicity and electrical conductivity as the amount of water transferred across the membrane (throughput) can be controlled by applying an electric field across the membranes.

**Example 5 - Generating power**

The membranes described herein are suitable for use in pressure retarded osmosis for the generation of power.
The results from the osmosis test rig demonstrate that when salt water is separated by fresh water an osmotic pressure gradient can be generated using the carbon nanotube Bucky papers (membranes) described herein (carbon nanotube sheets and carbon nanotube / cellulose acetate composite membranes). We have demonstrated the potential use of such membranes for efficient and renewable salinity power generation using reverse osmosis systems. Referring to Fig. 4, the schematic demonstrates how hydrostatic pressure created by osmosis across a membrane 2 to sea water 3 can be used to turn a turbine 4 which can then be used to create energy.
Membrane fouling or 'clogging' is a known issue with commercial salinity power plants. The main substances which cause membrane fouling are salts, soluble polymers, superfine colloidal particles, and bacteria growing colonising the inside of membrane pores. It is known that these substances have the most influence on membrane decreasing throughput of the membrane during the osmosis process. In order to overcome this problem the membranes described herein comprise a bucky paper as a conducting layer which allows for an electric field to be applied across the membrane. It is envisaged that applying an electric field across the membrane during the osmosis process will help the diffusion of charged particles from membrane surface by thinning the sedimentation layer near the membrane surface thus helping to maintain constant membrane throughput throughout the power generation.
The invention is not limited to the embodiment hereinbefore described, with reference to the accompanying drawings, which may be varied in construction and detail.

References

S.S. Madaeri. Warer res. 33/2:301 (1999)
A. Srivastava et al. Nature Materials 3:610 (2004)
H. Dai. Acc. Chem. Res. 35:1035 (2002).
J. Holt et al. Science 312:1034 (2006)
G. Hummer et al. Nature 414:188 (2001)
K. Murata et al. Nature 407:599 (2000)
M. Majumder et al. Nature 438:55 (2005)
A. Tess , Science 273:483 (1996)
A. M. Berezhkovskii et al. Phys Rev E65, Art No 060201 (2002)

**Claims**

1. Use of a membrane comprising a support layer and an electrically conductive porous nanotube layer for generating power from water by pressure retarded osmosis.

2. Use as claimed in claim 1 wherein the support layer comprises a Bucky paper.

3. Use as claimed in claim 1 or 2 wherein the membrane comprises a strengthening layer, the strengthening layer may comprise cellulose acetate.

4. Use as claimed in any of claims 1 to 3 wherein the electrically conductive nanotubes are arranged in a mat.

5. Use as claimed in any of claims 1 to 3 wherein the electrically conductive nanotubes are orientated with respect to the support layer.

6. Use as claimed in any of claims 1 to 5 wherein the electrically conductive nanotubes are carbon nanotubes.

7. Use as claimed in any of claims 1 to 6 wherein the electrically conductive nanotubes are single walled nanotubes and/or double walled nanotubes and/or multiwalled nanotubes.

8. Use as claimed in any of claims 1 to 7 wherein the electrically conductive nanotubes are functionalised, the nanotubes may be functionalised with COOH and/or silver.

9. Use as claimed in any of claims 1 to 8 wherein the support layer comprises a filter membrane, the filter membrane may comprise pores with an average size of about $0.2\mu$m.

10. Use as claimed in claim 9 wherein the filter membrane comprises mixed cellulose esters and/or nylon 66 and/or fluoropore.

11. Use as claimed in any of claims 1 to 10 wherein the nanotube layer has a porosity of between about 10% and about 20%, the nanotube layer may have an average pore size of between about $0.04\mu$m and about $0.16\mu$m.

12. Use as claimed in any of claims 3 to 11 wherein the strengthening layer has a porosity of between about 85% to about 95%, the strengthening layer may have an average pore size of between about $0\mu$m to about $1\mu$m.

13. Use as claimed in any of claims 1 to 12 wherein the water is salt water.

14. A method for generating power from an osmotic pressure gradient generated across a membrane comprising a support layer and an electrically conductive porous nanotube layer comprising the steps of:

   - providing a membrane as claimed in any of claims 1 to 13;
   - pumping salt water and fresh water across the membrane to create an osmotic difference across the membrane;
   - applying an alternating electric current to the electrically conductive porous nanotube layer; and
   - harnessing the power generated from the osmotic pressure gradient.

15. A method as claimed in claim 14 wherein the alternating electric current is applied in the range of between about 20 to about 150V, the alternating electric current may be applied in the range of between about 20 to about 10,000 Hz.

**Fig. 1**

**Fig. 2**

**Fig. 3**

4

Turbine moved by
hydrostatic pressure
created by osmosis

3 [ Sea water in ] ═► water moves by osmosis ══► Brackish water out

1 [ Fresh water in ] ═► Fresh water out

2

Membrane

**Fig. 4**

Δh

Pure Water

osmosis at equilibrium

**Fig 5**

Europäisches
Patentamt
European
Patent Office
Office européen
des brevets

# EUROPEAN SEARCH REPORT

**Application Number**

EP 09 39 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M.S. MAUTER, M. ELIMELECH: "Environmental Applications of Carbon-Based Nanomaterials" ENVIRONMENTAL SCIENCE & TECHNOLOGY, vol. 42, no. 16, 2008, pages 5843-5859, XP002571722 | 1,13 | INV. B01D61/00 B01D71/02 C01B31/02 F03G7/00 |
| A | * page 5844, column 2, last paragraph - page 5845, column 2, last paragraph * * page 5849, column 1, lines 2-8 * ----- | 2-12 | |
| X | WO 2009/035415 A1 (UNIV SINGAPORE [SG]; NG HOW YONG [SG]; DUAN WEI [SG]) 19 March 2009 (2009-03-19) | 1,3, 6-10,13 | |
| A | * abstract * * paragraphs [0013], [0017], [0039] - [0040], [0051] - [0055], [0083], [0084], [0091], [0100], [0136] * ----- | 2,4-5, 11-12, 14-15 | |
| A | WO 2008/028155 A2 (VIRGINIA TECH INTELL PROP [US]; MARAND EVA [US]; KIM SANGIL [US]) 6 March 2008 (2008-03-06) * the whole document * ----- | 1-13 | |
| A | WO 2004/009884 A1 (UNIV FLORIDA [US]) 29 January 2004 (2004-01-29) * the whole document * ----- | 1-12 | TECHNICAL FIELDS SEARCHED (IPC) B01D C01B F03G |
| A | US 3 906 250 A (LOEB SIDNEY) 16 September 1975 (1975-09-16) * the whole document * ----- | 14-15 | |

-/--

The present search report has been drawn up for all claims

| Place of search | Date of completion of the search | Examiner |
|---|---|---|
| The Hague | 9 March 2010 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 39 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOLT J K ET AL: "Fast Mass Transport Through Sub-2-Nanometer Carbon Nanotubes" SCIENCE, AMERICAN ASSOCIATION FOR THE ADVANCEMENT OF SCIENCE, WASHINGTON, DC; US, vol. 312, 19 May 2006 (2006-05-19), pages 1034-1037, XP002427790 ISSN: 0036-8075 * the whole document * | 1-12 | |
| A | A. SRIVASTAVA ET AL.: "Carbon nanotube filters" NATURE MATERIALS, vol. 3, 1 August 2004 (2004-08-01), pages 610-614, XP002571723 * the whole document * | 1-12 | |

|  |  |
|---|---|
|  | TECHNICAL FIELDS SEARCHED (IPC) |

The present search report has been drawn up for all claims

| Place of search | Date of completion of the search | Examiner |
|---|---|---|
| The Hague | 9 March 2010 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 39 4028

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2010

| Patent document cited in search report | | Publication date | Patent family member(s) | | Publication date |
|---|---|---|---|---|---|
| WO 2009035415 | A1 | 19-03-2009 | NONE | | |
| WO 2008028155 | A2 | 06-03-2008 | US | 2008290020 A1 | 27-11-2008 |
| WO 2004009884 | A1 | 29-01-2004 | AU | 2003249324 A1 | 09-02-2004 |
| US 3906250 | A | 16-09-1975 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *H. Dai. Acc. Chem. Res.,* 2002, vol. 35, 1035
- **J. HOLT et al.** *Science,* 2006, vol. 312, 1034
- **G. HUMMER et al.** *Nature,* 2001, vol. 414, 188
- **K. MURATA et al.** *Nature,* 2000, vol. 407, 599
- **M. MAJUMDER et al.** *Nature,* 2005, vol. 438, 55
- **A. TESS.** *Science,* 1996, vol. 273, 483
- **A. M. BEREZHKOVSKII et al.** *Phys Rev,* 2002, vol. E65 (060201